# EUROPEAN PATENT APPLICATION

(11) **EP 4 745 110 A1**
(43) Date of publication of application: **20.05.2026**
(21) Application number: 24842939.1
(22) Date of filing: 03.07.2024
(51) Int. Cl.: C04B 35/01, C09K 11/02, C09K 11/80, F21V 9/30, F21Y 115/10, F21Y 115/30

(54) **NEAR-INFRARED FLUORESCENT CERAMIC AND NEAR-INFRARED FLUORESCENT DEVICE COMPRISING SAME**

(30) Priority: 14.07.2023 JP 2023115837
(71) Applicant: Panasonic Intellectual Property Management Co., Ltd., Kadoma-shi, Osaka 571-0057 (JP)
(72) Inventor: NITTA, Mitsuru, Kadoma-shi, Osaka 571-0057 (JP); OSHIO, Shozo, Kadoma-shi, Osaka 571-0057 (JP); IWATA, Koki, Kadoma-shi, Osaka 571-0057 (JP); FUJIWARA, Chigusa, Kadoma-shi, Osaka 571-0057 (JP)
(74) Representative: Müller-Boré & Partner Patentanwälte PartG mbB
(86) International application number: PCT/JP2024/024026
(87) International publication number: WO 2025/018145

(57) **Abstract**

Provided is a near-infrared fluorescent ceramic (1) including: a first inorganic compound; and a second inorganic compound different from the first inorganic compound, wherein the near-infrared fluorescent ceramic emits fluorescence. The first inorganic compound is a phosphor that emits near-infrared light having a fluorescence peak within a wavelength range of 730 nm or more and 2,500 nm or less. The near-infrared fluorescent ceramic (1) has a sea-island structure including a continuous phase (2) configured with the first inorganic compound, and a dispersed phase (3) configured with the second inorganic compound and dispersed inside the continuous phase. A near-infrared light emitting device (10) includes the near-infrared fluorescent ceramic.

## Description

### TECHNICAL FIELD

The present invention relates to a near-infrared fluorescent ceramic, and a near-infrared light emitting device provided with the near-infrared fluorescent ceramic.

### BACKGROUND ART

Near-infrared light has a property of easily penetrating the living body, and thus it is convenient for obtaining information inside the living body, and treating lesions inside the living body. Near-infrared light has a property of penetrating organic substances, and thus it is also advantageous when inspecting contents or a foreign substance in a container made from an organic substance, in an unopened state. Thus, a near-infrared light emitting device that emits near-infrared light is expected to be applied to medical lighting and inspection equipment lighting.

Patent Literature 1 discloses a red light and near-infrared light emitting material that emits a red light and near-infrared light in a range of 650 nm to 1,700 nm. Specifically,

Patent Literature 1 discloses a red light and near-infrared light emitting material including a compound represented by the molecular formula aSc₂O₃·Ga₂O₃·bR₂O₃ where the R element includes one or two elements of Cr, Ni, Fe, Yb, Nd, or Er, and 0.001 ≤ a ≤ 0.6 and 0.001 ≤ b ≤ 0.1. Patent Literature 1 also discloses a red light and near-infrared light emitting material represented by the general formula: aSc₂O₃·Ga₂O3·bCr₂O₃.

There has been a need for a near-infrared fluorescent ceramic which can be used in a near-infrared light emitting device, and includes a near-infrared phosphor having excellent emission properties.

### CITATION LIST

### PATENT LITERATURE

Patent Literature 1: Japanese Unexamined Patent Application Publication 2021-529240

### SUMMARY OF INVENTION

However, conventionally known near-infrared fluorescent ceramics have many voids and grain boundaries therein. Thus, conventional near-infrared fluorescent ceramics have an issue of inferior quality as a ceramic. In addition, conventional near-infrared light emitting devices provided with such near-infrared fluorescent ceramics have an issue of insufficient performance and reliability because near-infrared fluorescent ceramics have the potential issue described above.

The present invention has been made in consideration of the above issues, which are inherent in the related art. An object of the present invention is to provide a near-infrared fluorescent ceramic having high emission properties, and excellent quality as a ceramic, and a near-infrared light emitting device provided with the near-infrared fluorescent ceramic.

In response to the above issues, a near-infrared fluorescent ceramic according to a first aspect of the present invention includes: a first inorganic compound; and a second inorganic compound different from the first inorganic compound, wherein the near-infrared fluorescent ceramic emits fluorescence, the first inorganic compound is a phosphor that emits near-infrared light having a fluorescence peak within a wavelength range of 730 nm or more and 2,500 nm or less, and the near-infrared fluorescent ceramic has a sea-island structure including a continuous phase configured with the first inorganic compound, and a dispersed phase configured with the second inorganic compound and dispersed inside the continuous phase.

A near-infrared light emitting device according to a second aspect of the present invention includes a near-infrared fluorescent ceramic.

### BRIEF DESCRIPTION OF DRAWINGS

[Fig. 1] Fig. 1 is a schematic diagram illustrating an example of a sea-island structure of a near-infrared fluorescent ceramic according to the present embodiment.
[Fig. 2] Fig. 2 is a schematic diagram illustrating an example of a near-infrared light emitting device according to the present embodiment.
[Fig. 3] Fig. 3 is a schematic diagram illustrating an example of an electronic device according to the present embodiment.
[Fig. 4] Fig. 4 includes a scanning electron micrograph (2,000x) indicating part of a fluorescent ceramic of example 1, the part being subjected to elemental analysis, and tables listing results of semi-quantitative analysis corrected using a ZAF method.
[Fig. 5] Fig. 5 includes a scanning electron micrograph (2,000x) indicating part of a fluorescent ceramic of example 2, the part being subjected to elemental analysis, and tables listing results of semi-quantitative analysis corrected using the ZAF method.
[Fig. 6] Fig. 6 includes a scanning electron micrograph (2,000x) illustrating part of a fluorescent ceramic of example 3, the part being subjected to elemental analysis, and tables listing results of semi-quantitative analysis corrected using the ZAF method.
[Fig. 7] Fig. 7 is a diagram illustrating X-ray diffraction patterns of fluorescent ceramics of example 1 to 3 and comparative example 1.
[Fig. 8] Fig. 8 includes photographs indicating results of observing the fluorescent ceramics of examples 1 to 3 and comparative example 1 at a magnification of 1,000 times using a scanning electron microscope.
[Fig. 9] Fig. 9 includes photographs indicating results of observing the fluorescent ceramics of examples 1 to 3 and comparative example 1 at a magnification of 3,000 times using a scanning electron microscope.
[Fig. 10] Fig. 10 is a diagram illustrating emission spectra of the fluorescent ceramics of examples 1 to 3 and comparative example 1 when excited with excitation light at a wavelength of 450 nm.
[Fig. 11] Fig. 11 is a diagram illustrating an X-ray diffraction pattern of a fluorescent ceramic of example 4.
[Fig. 12] Fig. 12 includes photographs indicating results of observing the fluorescent ceramic of example 4 at a magnification of 1,000 times and at a magnification of 3,000 times using a scanning electron microscope.
[Fig. 13] Fig. 13 includes a reflected electron image of the fluorescent ceramic of example 4, and diagrams illustrating elemental maps of gallium, scandium, phosphorus, and boron through energy dispersive X-ray analysis.

### DESCRIPTION OF EMBODIMENTS

Referring to the drawings, a description is given below of a near-infrared fluorescent ceramic according to the present embodiment, and a near-infrared light emitting device using the near-infrared fluorescent ceramic. Note that dimensional ratios in the drawings are exaggerated for convenience of the description and are sometimes different from actual ratios.

### [Near-infrared fluorescent ceramic]

Conventionally known near-infrared fluorescent ceramics are mainly made from a near-infrared phosphor. Near-infrared fluorescent ceramics are made into a ceramic for the purpose of increasing light absorption rate of light-absorbing ions (fluorescent ions) included in a near-infrared phosphor and having generally low light absorption rate, as well as enhancing thermal conductivity as a wavelength converter, thereby achieving high output of near-infrared light. Note that in order to improve the light absorption rate of a near-infrared fluorescent ceramic, it is common practice in this technical field to increase the concentration of light-absorbing ions, to achieve high density, and to eliminate substances other than a desired phosphor component as much as possible by achieving high purity as a bulk near-infrared phosphor.

However, as described above, conventional near-infrared fluorescent ceramics, especially near-infrared fluorescent ceramics that emit fluorescence having an emission peak in a long-wavelength region exceeding 800 nm, have many voids and grain boundaries therein, partly because the history of material development is short. Therefore, the near-infrared fluorescent ceramics have an issue that the quality of a ceramic as an integrated material is inferior.

In addition, when two solid solutions where crystal phases of end components are different from each other, such as a solid solution of β-Ga₂O₃ (monoclinic system) and Sc₂O₃ (cubic system), are used as host compounds of a phosphor, there are the following issues. (1) Internal stress tends to occur in crystals of a solid solution, and it is difficult to obtain a high-quality ceramic. (2) Since the crystal system changes from a monoclinic system to a cubic system, or from a cubic system to a monoclinic system, at a certain solid solution ratio, it is not possible to obtain desired fluorescence properties by adjusting the solid solution ratio. (3) At a solid solution ratio exhibiting desired fluorescence properties, multiple types of phases are likely to be formed, and a ceramic is likely to have different phases mixed. Therefore, not only is it difficult to achieve high quality, but also property variations among production lots are likely to occur, resulting in low yield.

Hence, conventional near-infrared light emitting devices and near-infrared utilizing devices that apply near-infrared fluorescent ceramics are provided with near-infrared fluorescent ceramics having such potential issues, and thus have a risk not only in terms of performance and reliability, but also in terms of production yield. An object of the present embodiment is to provide a high quality near-infrared fluorescent ceramic advantageous for industrial production, especially a long-wavelength type near-infrared fluorescent ceramic.

The near-infrared fluorescent ceramic according to the present embodiment at least includes a first inorganic compound that is a phosphor emitting near-infrared light, and a second inorganic compound different from the first inorganic compound. The near-infrared fluorescent ceramic has an inorganic phase configured by the first inorganic compound, and an inorganic phase configured by the second inorganic compound, and further has a structure where these inorganic phases are mixed and phase-separated.

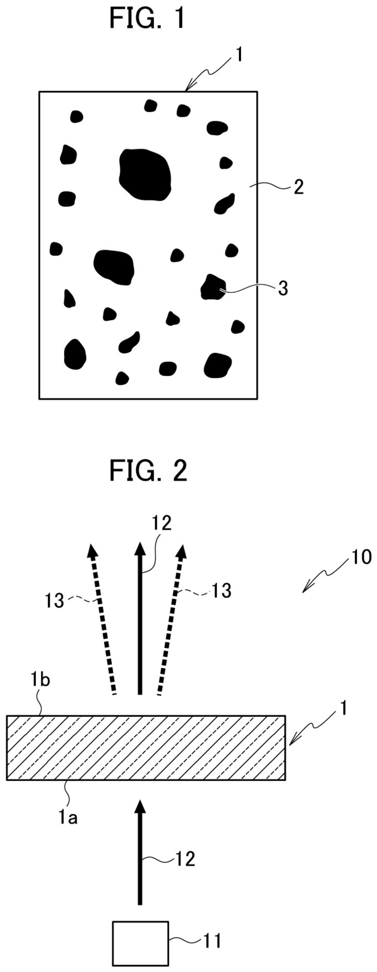

Specifically, as illustrated in Fig. 1, in a near-infrared fluorescent ceramic 1, the inorganic phase configured by the first inorganic compound forms a continuous phase 2, and the inorganic phase configured by the second inorganic compound forms a dispersed phase 3. Multiple portions of the dispersed phase 3 each having a small volume are scattered in the continuous phase 2, and the entire periphery of each dispersed phase 3 portion is covered with the continuous phase 2. Thus, the near-infrared fluorescent ceramic 1 has a sea-island structure including the continuous phase 2 configured with the first inorganic compound, and the dispersed phase 3 portions configured with the second inorganic compound dispersed in the continuous phase 2.

In the near-infrared fluorescent ceramic 1, as illustrated in Fig. 1, the first inorganic compound and the second inorganic compound form the sea-island structure, where the first inorganic compound appearing like a sea as a continuous body wraps around the second inorganic compound appearing like islands as a discontinuous body. Due to such a sea-island structure, the second inorganic compound acts to bind the first inorganic compound functioning as a near-infrared phosphor. Consequently, grain boundaries and voids in the first inorganic compound are reduced, and thus quality of the near-infrared fluorescent ceramic 1 obtained can be improved. That is, it is possible to obtain a near-infrared fluorescent ceramic that is dense, has high mechanical strength, and further is convenient for a wavelength converter emitting a near-infrared ray. Since grain boundaries and voids in the first inorganic compound are reduced, excitation light emitted on the near-infrared fluorescent ceramic 1 can easily reach the first inorganic compound. Consequently, the first inorganic compound efficiently absorbs part of the excitation light and emits near-infrared light, and thus emission intensity of the near-infrared light can be enhanced.

Note that in the sea-island structure of the near-infrared fluorescent ceramic 1, since the first inorganic compound forms the continuous phase 2, and the second inorganic compound forms the dispersed phase 3, the volume of the first inorganic compound is larger than that of the second inorganic compound. Specifically, in the near-infrared fluorescent ceramic 1, the continuous phase 2 configured with the first inorganic compound is 50% by volume or more, and the dispersed phase 3 configured with the second inorganic compound is less than 50% by volume. Note that in the near-infrared fluorescent ceramic 1, the continuous phase 2 may be 60% by volume or more, and the dispersed phase 3 may be 40% by volume or less, or the continuous phase 2 may be 70% by volume or more, and the dispersed phase 3 may be 30% by volume or less. In the near-infrared fluorescent ceramic 1, the continuous phase 2 may be 80 by volume or more, and the dispersed phase 3 may be 20% by volume or less.

In the near-infrared fluorescent ceramic 1, the continuous phase 2 includes the first inorganic compound as a main component. Specifically, the continuous phase 2 preferably includes 50% by mole of the first inorganic compound, and preferably includes 70% by mole or more of the first inorganic compound. The continuous phase 2 may be formed with the first inorganic compound. The dispersed phase 3 mainly includes the second inorganic compound. Specifically, the dispersed phase 3 preferably includes 50% by mole of the second inorganic compound, and preferably includes 70% by mole or more of the second inorganic compound. The dispersed phase 3 may be formed with the second inorganic compound.

In the near-infrared fluorescent ceramic 1, the first inorganic compound of the continuous phase 2, and the second inorganic compound of the dispersed phase 3 preferably include the same constituent element. Here, the constituent element acts to relax an abrupt compositional difference at an interface between the first inorganic compound and the second inorganic compound, and to bind the first inorganic compound and the second inorganic compound through the constituent element. Thus, the near-infrared fluorescent ceramic is convenient for homogenizing internal stress distribution and forming a strong form which is hard to break.

In the near-infrared fluorescent ceramic 1, the constituent element included in the first inorganic compound and the second inorganic compound is preferably a metal element which becomes a metal ion with a valence of three. As described above, in the near-infrared fluorescent ceramic 1, at least the first inorganic compound is a phosphor emitting near-infrared light. The second inorganic compound may be a phosphor, but need not be a phosphor. When the second inorganic compound is a phosphor, it may be a phosphor emitting near-infrared light. When the constituent element included in the first inorganic compound and the second inorganic compound is a metal element that becomes a trivalent metal ion, both the first inorganic compound and the second inorganic compound can be activated by a Cr³⁺ ion known as a fluorescent ion emitting near-infrared fluorescence. Thus, the near-infrared fluorescent ceramic 1 obtained is a high-performance fluorescent ceramic where both the first inorganic compound and the second inorganic compound function as near-infrared phosphors. Note that it is preferable that such constituent element is at least one of scandium or gallium.

The first inorganic compound in the near-infrared fluorescent ceramic 1 will be described in more detail. As described above, the first inorganic compound at least includes a near-infrared phosphor emitting near-infrared light. Specifically, the near-infrared phosphor forming the first inorganic compound is a phosphor that absorbs primary light emitted from a solid-state light emitting element, and converts it into wavelength-converted light including near-infrared light. Such a near-infrared phosphor is preferably a phosphor that emits near-infrared light having a fluorescence peak within a wavelength range of 730 nm or more and less than 2,500 nm, and preferably a phosphor that emits near-infrared light having a fluorescence peak within a wavelength range of 780 nm or more and less than 2,500 nm. The near-infrared phosphor is preferably a phosphor that emits near-infrared light having a fluorescence peak within a wavelength range of 730 nm or more and less than 1,000 nm, and more preferably a phosphor that emits near-infrared light having a maximum intensity within a wavelength range of 780 nm or more and less than 900 nm. Thus, since primary light emitted from a solid-state light emitting element can be easily wavelength-converted into a near-infrared optical component, it is advantageous, for example, to obtain a near-infrared optical component required for inspection light.

As the near-infrared phosphor, for example, various inorganic phosphors known for near-infrared light sources can be used. Specifically, as the near-infrared phosphor, a phosphor that is activated with at least one of a rare earth ion or a transition metal ion, and emits fluorescence including a near-infrared optical component can be used. The rare earth ion is preferably at least one selected from the group consisting of Nd³⁺, Eu²⁺, Ho³⁺, Er³⁺, Tm³⁺, and Yb³⁺. The transition metal ion is preferably at least one selected from the group consisting of Ti³⁺, V⁴⁺, Cr⁴⁺, V³⁺, Cr³⁺, V²⁺, Mn⁴⁺, Fe³⁺, Co³⁺, Co²⁺, and Ni²⁺. The near-infrared phosphor is preferably an oxide, sulfide, nitride, halide, oxysulfide, oxynitride, or oxyhalide, including the fluorescent ion.

In the near-infrared fluorescent ceramic 1, the first inorganic compound preferably includes a Cr³⁺ ion as an activator. The Cr³⁺ ion is an orthodox fluorescent ion that can absorb visible light, especially blue light or red light, and converts it into a near-infrared optical component. Thus, when the first inorganic compound includes a Cr³⁺ ion, the near-infrared fluorescent ceramic 1 can be suitably combined with a solid-state light emitting element emitting visible light. Note that the first inorganic compound may further include Ni²⁺ as an activator in addition to a Cr³⁺ ion.

As described above, in the near-infrared fluorescent ceramic 1, the first inorganic compound preferably includes a Cr³⁺ ion as an activator. In such a configuration, near-infrared light emitted from the near-infrared fluorescent ceramic 1 includes fluorescence at least due to a Cr³⁺ ion, that is, fluorescence based on electron energy transition of ⁴T₂ → ⁴A₂. The near-infrared fluorescent ceramic 1 including a Cr³⁺ ion can emit fluorescence having a fluorescence peak within a wavelength range of 780 nm or more and 1,000 nm or less, and having a large fluorescence spectrum half width, which is convenient for use in an application technique of near-infrared spectroscopy.

In the near-infrared fluorescent ceramic 1, the first inorganic compound is preferably a compound having the same crystal structure as β-Ga₂O₃. For example, (Ga, Sc)₂O₃:Cr³⁺ phosphor having the same crystal structure as β- Ga₂O₃ is known to be a near-infrared phosphor which emits near-infrared light having a large fluorescence spectrum half width, and relatively small temperature quenching. Thus, when the first inorganic compound is a phosphor having a compound having the same crystal structure as β-Ga₂O₃, as a host material, it is possible to obtain a near-infrared fluorescent ceramic having a large fluorescence spectrum half width and suitable for emitting a near-infrared ray having small temperature quenching.

The second inorganic compound in the near-infrared fluorescent ceramic 1 will be described in more detail. In the present embodiment, the first inorganic compound forms the continuous phase 2 and is made from at least a phosphor which emits near-infrared light, while the second inorganic compound may be a phosphor, but need not be a phosphor as long as the second inorganic compound forms the dispersed phase 3. The second inorganic compound is preferably a compound of the same type as the first inorganic compound. That is, when the first inorganic compound is an oxide, the second inorganic compound is also preferably an oxide. Similarly, when the first inorganic compound is a nitride, the second inorganic compound is also preferably a nitride.

In the near-infrared fluorescent ceramic 1, both the first inorganic compound and the second inorganic compound are preferably oxides. Here, since the first inorganic compound and the second inorganic compound can be produced using an orthodox ceramic technique, a near-infrared fluorescent ceramic is suitable for industrial production.

In the near-infrared fluorescent ceramic 1, the second inorganic compound is preferably a compound including boron (B). The second inorganic compound is more preferably a compound mainly including MBO₃ (M is a metal element). When the second inorganic compound is a compound including boron, for example, boric acid (H₃BO₃) or boron oxide (B₂O₃) known as a low melting point material is used as a part of ceramic raw materials, thereby producing the near-infrared fluorescent ceramic 1. That is, as will be described below, by adding boric acid or boron oxide to the raw materials of the first inorganic compound and calcining, the second inorganic compound, made from a compound including boron, can be produced in addition to the first inorganic compound. At this time, a sea-island structure is obtained including the continuous phase 2 configured with the first inorganic compound, and the dispersed phase 3 configured with the second inorganic compound.

Thus, when boric acid (H₃BO₃) or boron oxide (B₂O₃) is used as a part of raw materials, a formation reaction of an intermediate compound is likely to occur in a region where reaction temperature is low in the calcination step. Consequently, a near-infrared fluorescent ceramic where the sea-island structure is formed can be obtained. When a low melting point material is used as a part of raw materials, the low melting point material acts on other ceramic raw materials to shift a reaction temperature region where multiple types of phases are likely to be formed, to a lower temperature side. Thus, it is also convenient to convert the first inorganic compound configuring the continuous phase 2 into a single crystal phase to achieve high crystal quality.

In the near-infrared fluorescent ceramic 1, the first inorganic compound may include (Ga_{1-(x+y)}ScₓCr_{y})₂O₃ as a main component. Note that, x and y satisfy 0 < x < 1, 0 < y < 0.1, and 0 < x + y < 1. That is, the first inorganic compound may include, as a main component, a phosphor that has, as a host, a complex oxide of gallium and scandium ((Ga, Sc)₂O₃) having the same crystal structure as β-Ga₂O₃, and that includes a Cr³⁺ ion as an activator. The second inorganic compound preferably includes (Sc_{1-z}Cr_{z})BO₃ as a main component. Note that z satisfies 0 ≤ z < 0.1. That is, the second inorganic compound may include, as a main component, an inorganic oxide represented by ScBO₃. The second inorganic compound may also include, as a main component, a phosphor including ScBO₃ as a host, and a Cr³⁺ ion as an activator. Since the first inorganic compound and the second inorganic compound include the oxide as a main component, the sea-island structure having the continuous phase 2 configured with the first inorganic compound, and the dispersed phase 3 configured with the second inorganic compound is easily formed. Consequently, the second inorganic compound acts to bind the first inorganic compound, and grain boundaries and voids in the first inorganic compound are reduced, thereby improving quality of the near-infrared fluorescent ceramic 1.

Note that in the near-infrared fluorescent ceramic 1, the first inorganic compound preferably includes (Ga_{1-(x+y)}ScₓCr_{y})₂O₃ at 50% by mole or more, and preferably includes by 70% by mole or more. The first inorganic compound may be formed with (Ga_{1-(x+y)}ScₓCr_{y})₂O₃. The second inorganic compound preferably includes (Sc_{1-z}Cr_{z})BO₃ at 50% by mole or more, and preferably at 70% by mole or more. The second inorganic compound may be formed with (Sc_{1-z}Cr_{z})BO₃.

As described above, when the first inorganic compound is a compound including (Ga_{1-(x+y)}ScₓCr_{y})₂O₃ as a main component, the second inorganic compound may be a compound including (Sc_{1-z}Cr_{z})BO₃ as a main component. However, the present embodiment is not limited to this aspect. For example, when the first inorganic compound is a compound including (Ga_{1-(x+y)}ScₓCr_{y})₂O₃ (x and y satisfy 0 < x <1, 0 < y < 0.1, and 0 < x + y <1) as a main component, the second inorganic compound can be a compound including (Sc_{1-z}Cr_{z})PO₄ (z satisfies 0 ≤ z < 0.1) as a main component.

In addition, when the first inorganic compound is a compound including (Ga_{1-(x+y)}ScₓCr_{y})₂O₃ (x and y satisfy 0 < x < 1, 0 < y < 0.1, and 0 < x + y < 1) as a main component, the second inorganic compound can be a compound including (Sc_{1-z}Cr_{z}) BO₃ and (Sc_{1-z}Cr_{z}) PO₄ (z satisfies 0 ≤ z < 0.1) as main components.

Furthermore, when the first inorganic compound is a compound including (Ga_{1-(x+y)} ScₓCr_{y})₂O₃ (x and y satisfy 0 < x < 1, 0 < y < 0.1, 0 < x + y < 1) as a main component, the second inorganic compound can be a compound including at least one selected from the group consisting of LiScO₂, LiGaO₂, LiGa₅O₈, ScAlO₃, and BaSc₂O₄, as a main component.

Here, a phosphor forming the first inorganic compound and represented by (GaSc)₂O₃:Cr³⁺ has a property of emitting light toward longer wavelengths as the scandium concentration increases. Thus, when it is desired to shift the emission peak of the near-infrared fluorescent ceramic 1 to the longer wavelength side, it is preferable to increase the concentration of scandium included in the first inorganic compound.

(GaSc)₂O₃:Cr³⁺ has a property that when the concentration of scandium is high, a temperature where a phase change occurs, that is, a temperature where transition to a crystal other than β-Ga₂O₃ crystal occurs, becomes low. In addition, by adding a low melting point material, such as boric acid, to promote crystal growth, the obtained fluorescent ceramic becomes denser. Thus, by adjusting the concentration of scandium, and adjusting the type and amount of the low melting point material, a composite of a (Ga, Sc)₂O₃ crystal and a ScBO₃ crystal, that is, a sea-island structure formed with these compounds, can be obtained.

As described above, the near-infrared fluorescent ceramic 1 of the present embodiment is a fluorescent ceramic which at least includes the first inorganic compound, and the second inorganic compound different from the first inorganic compound, and emits fluorescence. The first inorganic compound is a phosphor which emits near-infrared light having a fluorescence peak within a wavelength range of 730 nm or more and 2,500 nm or less. The near-infrared fluorescent ceramic 1 has a sea-island structure including the continuous phase 2 configured with the first inorganic compound, and the dispersed phase 3 configured with the second inorganic compound and dispersed inside the continuous phase 2.

Since the near-infrared fluorescent ceramic 1 has a structure where the first inorganic compound, which is a continuous body, wraps around the second inorganic compound, which is a discontinuous body, the second inorganic compound acts to bind the first inorganic compound. Consequently, grain boundaries and voids in the first inorganic compound are reduced, and thus mechanical strength of the near-infrared fluorescent ceramic 1 can be enhanced. Since the grain boundaries and voids in the first inorganic compound are reduced, excitation light emitted on the near-infrared fluorescent ceramic 1 can easily reach the first inorganic compound. Hence, the first inorganic compound efficiently absorbs excitation light and emits near-infrared light, and thus it is possible to increase emission intensity of the near-infrared light. The near-infrared fluorescent ceramic 1 is formed with an inorganic compound having high thermal conductivity as a whole, with high heat dissipation properties, and thus temperature quenching of a phosphor formed with the first inorganic compound can be controlled.

Next, a method of producing the near-infrared fluorescent ceramic according to the present embodiment will be described. The near-infrared fluorescent ceramic according to the present embodiment can be produced by adding, to raw materials for preparing the first inorganic compound, a low melting point material capable of reacting with the raw materials, and causing them to react.

Specifically, when the first inorganic compound is formed with (Ga_{1-(x+y)} SeₓCr_{y})₂O₃, for example, gallium oxide (Ga₂O₃), scandium oxide (Sc₂O₃), and chromium oxide (Cr₂O₃) are used as raw materials for preparing the first inorganic compound. Examples of the low melting point material capable of reacting with the raw materials used include boric acid (H₃BO₃), boron oxide (B₂O₃), diammonium hydrogen phosphate ((NH₄)₂HPO₄), lithium carbonate (Li₂CO₃), lithium fluoride (LiF), aluminum chloride (AlCl₃), aluminum fluoride (AlF₃), and barium chloride (BaCl₂).

The raw materials of the first inorganic compound are weighed so as to have a stoichiometric composition of the first inorganic compound, or a composition close to the stoichiometric composition, and then sufficiently mixed using a mortar or a ball mill to obtain a mixed raw material. Further, a low melting point material is added to the mixed raw material, and mixed sufficiently. The mixed raw material thus obtained is added to a mold and then pressurized to produce a molded body made from the mixed raw material. Note that the molding of the mixed raw material can be performed in the atmosphere at a normal temperature.

Thereafter, the molded body thus obtained is calcined using an electric furnace or the like. When the molded body is calcined, it is preferable to heat the molded body for several hours at a calcination temperature of 900 °C to 1,700 °C, and particularly preferable at a temperature of 1,300 °C to 1,600 °C, in the atmosphere and/or in a weakly reducing atmosphere. By calcinating the molded body in this manner, the low melting point material reacts with another ceramic raw material, that is, a part of the raw materials of the first inorganic compound, to form multiple phases. Consequently, a sea-island structure including a continuous phase configured with the first inorganic compound, and a dispersed phase configured with the second inorganic compound is formed.

Then, the obtained sintered body is subjected to polishing processing or the like, as necessary, and thus the near-infrared fluorescent ceramic according to the present embodiment can be obtained.

### [Near-infrared light emitting device]

Next, a near-infrared light emitting device according to the present embodiment will be described. Note that in this specification, "near-infrared light emitting device" is also referred to simply as "light emitting device".

A near-infrared light emitting device 10 according to the present embodiment, as illustrated in Fig. 2, includes the near-infrared fluorescent ceramic 1 described above, and a solid-state light emitting element 11 that emits light (primary light) to be emitted on the near-infrared fluorescent ceramic 1. An element that emits primary light having a maximum intensity within a wavelength range of 435 nm or more and less than 560 nm, preferably a wavelength range of 440 nm or more and less than 480 nm, can be used as the solid-state light emitting element. An element that emits primary light having a maximum intensity within a wavelength range of 580 nm or more and less than 680 nm, preferably a wavelength range of 600 nm or more and less than 660 nm, can be used as the solid-state light emitting element. An element that emits primary light having a maximum intensity within a wavelength range of 700 nm or more and less than 780 nm, preferably a wavelength range of 700 nm or more and less than 750 nm, can be used as the solid-state light emitting element.

For the solid-state light emitting element, for example, a light emitting diode (LED) or a laser diode can be used. By using, for example, an LED module or laser diode, emitting high energy light of 1 W or more, a light emitting device can be expected to achieve an optical output in the class of several hundred mW. By using an LED module emitting high energy light of 3 W or more, or 10 W or more, a light emitting device can be expected to achieve an optical output in the class of several W. By using an LED module emitting high energy light of 30 W or more, a light emitting device can be expected to achieve an optical output in the class of more than 10 W. By using an LED module emitting high energy light of 100 W or more, a light emitting device can be expected to achieve an optical output in the class of more than 30 W.

When a laser diode is used as a solid-state light emitting element, and primary light is set as laser light, a specification is made where the near-infrared fluorescent ceramic 1 is irradiated with a high-density spotlight. Hence, the light emitting device obtained can be a point light source of high output, and thus a range of industrial use of solid state lighting can be expanded. For example, an edge emitting laser (EEL), a vertical cavity surface emitting laser (VCSEL), or the like can be used as the laser diode.

A light guide member, such as an optical fiber, may be interposed between the solid-state light emitting element and the near-infrared fluorescent ceramic. This can achieve a structure where the solid-state light emitting element and the near-infrared fluorescent ceramic can be spatially separated from each other. Thus, it is possible to obtain a light emitting device where a light emitting part is lightweight and can be freely moved, and consequently, can easily and freely change an irradiation location.

As described above, in the near-infrared light emitting device 10, the solid-state light emitting element is preferably at least one of a light emitting diode or a laser diode. However, the solid-state light emitting element is not limited to these, and any light emitting element can be used as long as it is possible to emit high-output primary light.

Note that the number of solid-state light emitting elements provided in the near-infrared light emitting device is not particularly limited, and may be a single or multiple. By using multiple solid-state light emitting elements, the output of primary light can be easily increased, and thus a light emitting device is advantageous for high output. Note that the number of solid-state light emitting elements is not particularly limited, but may be appropriately selected from, for example, 9 or more, 16 or more, 25 or more, 36 or more, 49 or more, 64 or more, 81 or more, or 100 or more. The upper limit of the number is not particularly limited, but may be appropriately selected from, for example, 9 or less, 16 or less, 25 or less, 36 or less, 49 or less, 64 or less, 81 or less, or 100 or less.

In the near-infrared light emitting device, the solid-state light emitting element is preferably a surface-emitting light source having a surface-emitting type. This controls variations in intensity distribution and unevenness in color tone of primary light with which the near-infrared fluorescent ceramic 1 is irradiated, and thus the light emitting device is advantageous in controlling unevenness in intensity distribution of output light.

In the near-infrared light emitting device 10, first, primary light 12 emitted from the solid-state light emitting element 11 is emitted on a front surface 1a of the near-infrared fluorescent ceramic 1. The emitted primary light 12 passes through the near-infrared fluorescent ceramic 1. When the primary light 12 passes through the near-infrared fluorescent ceramic 1, a near-infrared phosphor included in the near-infrared fluorescent ceramic 1 and configured with the first inorganic compound absorbs part of the primary light 12 to emit near-infrared light. In this way, a back surface 1b of the near-infrared fluorescent ceramic 1 emits light including the primary light 12 and near-infrared light 13 as output light.

As described above, since the near-infrared fluorescent ceramic 1 is formed with an inorganic compound having high thermal conductivity, a heat dissipation property is high, and temperature quenching of the near-infrared phosphor configured with the first inorganic compound can be controlled. Thus, in the near-infrared light emitting device 10 according to the present embodiment, the absolute number of photons configuring output light can be increased by means such as causing the solid-state light emitting element 11 to be a high-output type, or increasing the number of the solid-state light emitting elements 11. Thus, optical energy of output light emitted from the light emitting device can be made to exceed 3 W, preferably 10 W, and more preferably 30 W. With the light emitting device of such a high-output type, it is possible to illuminate with strong output light (for example, near-infrared light), and a relatively strong near-infrared ray can be emitted even at a large distance from an irradiation object. Even when an irradiation object is minute or thick, the light emitting device can easily obtain information related to the object.

The near-infrared light emitting device 10 can also increase photon density supplied to a phosphor, by using a means such as making the solid-state light emitting element 11 be a light emitting element which emits primary light of high optical density, such as a laser diode, or focusing the light emitted by the solid-state light emitting element 11 using an optical lens. For example, the light energy density of primary light emitted from the solid-state light emitting element 11 can be made to exceed 0.3 W/mm², preferably 1.0 W/mm², and more preferably 3.0 W/mm². Here, the light energy density of primary light is large, and thus the light emitting device can be made to emit relatively strong output light even with a configuration where primary light that has been optically diffused is emitted on the near-infrared fluorescent ceramic 1. With a configuration where primary light that has not been optically diffused is emitted on the near-infrared fluorescent ceramic 1, the light emitting device can be made to emit output light having a large light energy density. Thus, it is possible to provide a light emitting device that can emit output light over a large area while utilizing a light emitting element having a small light emitting surface, and a light emitting device that can output light having a large light energy density. Furthermore, the light emitting device can also be made capable of point-output of near-infrared light having a large light energy density, for example. Note that the upper limit of the light energy density of the primary light emitted by a solid-state light emitting element is not particularly limited, and can be, for example, 30 W/mm².

By using the solid-state light emitting element 11 that emits such primary light having a high light density, the near-infrared fluorescent ceramic 1 can increase the energy density of light emitted to exceed 0.3 W/mm², preferably 1.0 W/mm², and more preferably 3.0 W/mm².

### [Electronic device]

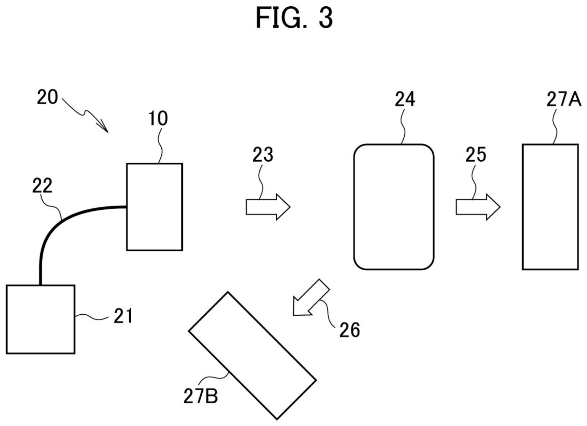

Next, an electronic device according to the present embodiment will be described. The electronic device according to the present embodiment includes the near-infrared light emitting device 10 described above. Fig. 3 schematically illustrates an example of the electronic device according to the present embodiment. An electronic device 20 at least includes a power supply circuit 21, a conductor 22, and the near-infrared light emitting device 10 including the near-infrared fluorescent ceramic 1 and the solid-state light emitting element 11. The power supply circuit 21 supplies power to the solid-state light emitting element 11 in the near-infrared light emitting device 10 through the conductor 22.

As described above, the near-infrared light emitting device 10 converts electric energy into light energy. The near-infrared light emitting device 10 converts at least part of electric energy supplied from the power supply circuit 21 into light energy that becomes output light 23, and outputs it. Note that the near-infrared light emitting device 10 in Fig. 3 is emits output light 23 including near-infrared light.

The electronic device 20 in Fig. 3 further includes a first detector 27A and a second detector 27B. The first detector 27A detects a transmitted optical component 25 of the output light 23, which has been emitted from the near-infrared light emitting device 10 onto an object to be irradiated 24. Specifically, the first detector 27A detects near-infrared light in the transmitted optical component 25, which has been transmitted through the object to be irradiated 24. The second detector 27B detects a reflected optical component 26 in the output light 23, which has been emitted from the near-infrared light emitting device 10 onto the object to be irradiated 24. Specifically, the second detector 27B detects near-infrared light in the reflected optical component 26, which has been reflected by the object to be irradiated 24.

In the electronic device 20 having such a configuration, the object to be irradiated 24 is irradiated with the output light 23 including a near-infrared optical component, and the transmitted optical component 25, which has been transmitted through the object to be irradiated 24, and the reflected optical component 26, which has been reflected by the object to be irradiated 24, are detected by the first detector 27A and the second detector 27B, respectively. Thus, it becomes possible for the electronic device 20 to detect property information of the object to be irradiated 24, where a near-infrared optical component is involved.

Here, the near-infrared light emitting device 10 according to the present embodiment can emit the output light 23, which includes at least near-infrared light and is convenient for detectors. Thus, combination of the light emitting device and a near-infrared detector provides an electronic device suitable for industrial use.

Further, the near-infrared light emitting device 10 according to the present embodiment can be configured to irradiate a wide area with a large energy of the output light 23. Thus, even when the object to be irradiated 24 is irradiated with the output light 23 from a distance, a signal having a good S/N ratio (signal to noise ratio) can be detected. Therefore, an electronic device is made suitable for inspection of a large object to be irradiated 24, batch inspection of widely distributed objects, detection of objects present in part of a large inspection area, and detection of people and objects from a distance.

Various types of photodetectors can be used for the first detector 27A and the second detector 27B. Specifically, a quantum-type photodetector (photodiode, phototransistor, photo IC, CCD image sensor, CMOS image sensors, and the like) that detects a charge generated when light enters a PN junction of a semiconductor can be used depending on the mode of use of the electronic device. The photodetector can also be a heat-type photodetector (thermopile using thermoelectric effect, pyroelectric element using pyroelectric effect, and the like) that detects a change in electrical properties caused by a temperature rise due to heat generated when light is received, or an infrared film that is sensitive to light.

As the first detector 27A and the second detector 27B, a single element utilizing a photoelectric conversion element alone may be used, or an imaging element integrating photoelectric conversion elements may be used. The form of the imaging element may be linear with a one-dimensional arrangement, or planar with a two-dimensional arrangement. An imaging camera can also be used as the first detector 27A and the second detector 27B.

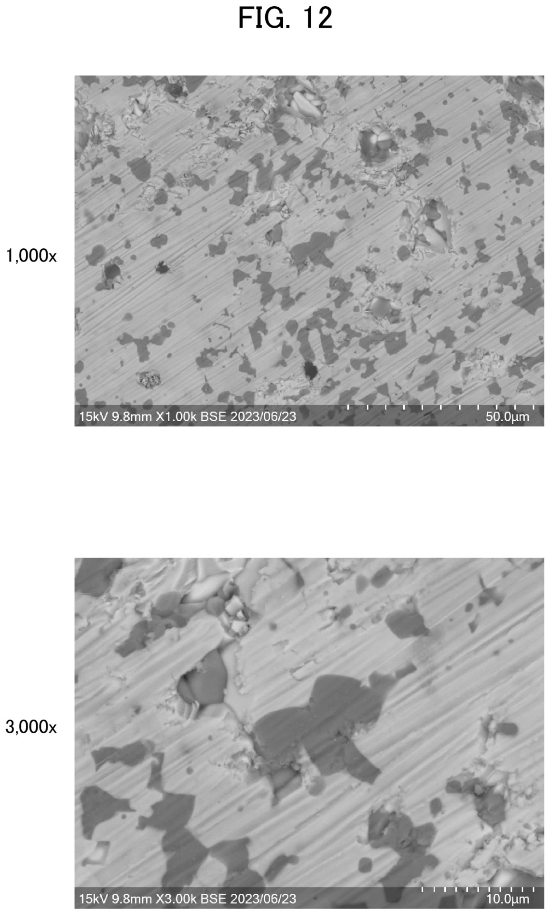

Note that although the electronic device 20 in Fig. 12 includes both the first detector 27A and the second detector 27B, the electronic device only needs to include at least one of the first detector 27A or the second detector 27B.

The electronic device according to the present embodiment can be used as an inspection device, a detection device, a monitoring device, or a sorting device for an object to be irradiated, using output light. The near-infrared optical component of the output light has a property of passing through materials. Thus, by adopting a configuration for irradiating a material with near-infrared light from outside and to detect transmitted or reflected light, the internal condition, the presence or absence of foreign matter, and the like without destroying the material.

In addition, the near-infrared optical component is invisible to the human eye, and its reflection properties depend on materials. Thus, by adopting a configuration to irradiate an object with near-infrared light and to detect the reflected light, people, animals, plants, and objects can be inspected even in the dark without being perceived by humans.

Furthermore, the electronic device according to the present embodiment can inspect the internal condition of a material and the presence or absence of foreign matter therein without destroying the material, determine the quality of the material, and select between good and defective products. Thus, by further providing the electronic device with a mechanism to sort an object to be irradiated in a normal state from an object to be irradiated in an abnormal state, it becomes possible to sort objects.

In the electronic device according to the present embodiment, the near-infrared light emitting device 10 is not a movable type, and can be a fixed type. Here, it is not necessary to have a complicated mechanism to operate a light emitting device mechanically, and thus the electronic device is unlikely to fail. By fixing a light emitting device indoors or outdoors, it is possible in a predetermined place to observe the state of people and objects at a fixed point and to count the number of people and objects. Thus, the electronic device is made advantageous for collecting big data useful for discovery of problems and useful for business utilization.

In the electronic device according to the present embodiment, the near-infrared light emitting device 10 can also be a movable type to change the irradiation place. For example, the near-infrared light emitting device 10 can be a movable type by mounting it to a moving stage or a moving body (vehicle, flying object, and the like). In this way, the near-infrared light emitting device 10 can irradiate a desired area and a wide range, and thus the electronic device is made advantageous for inspecting a large object and for inspecting the condition of an object outdoors.

In addition to the light emitting device, the electronic device according to the present embodiment can be configured to include a hyperspectral camera as an imaging camera. Thus, the electronic device can perform hyperspectral imaging. An electronic device provided with a hyperspectral camera can distinguish differences that cannot be distinguished with the naked eye or a regular camera as images, making it a useful inspection device in a wide range of fields related to product inspection, product selection, and the like.

The electronic device according to the present embodiment can be used for medical, veterinary, biotechnological, agricultural, forestry and fisheries, animal husbandry (meat, meat products, dairy products, and the like), and industrial (foreign matter inspection, content inspection, shape inspection, packaging condition inspection, and the like) applications. The electronic device can also be used for inspection of pharmaceuticals, animal experiments, food, beverages, agricultural, forestry and fisheries products, livestock products, and industrial products. In other words, the electronic device according to the present embodiment can be used for any of human body, animal and plant, and object, and can also be used for any of gas, liquid, and solid.

The electronic device according to the present embodiment is preferably used as a medical device, a therapeutic device, a beauty device, a health device, a care related device, an analytical device, a measuring device, or an evaluation device.

For example, for the purpose of medical and biotechnology development, the electronic device according to the present embodiment can be used for examination, detection, measurement, evaluation, assay, analysis, observation, monitoring, separation, diagnosis, treatment, purification, and the like of 1) blood, body fluid, and their components, 2) excreta (urine and feces), 3) proteins and amino acids, 4) cells (including cancer cells), 5) genes, chromosomes, and nucleic acids, 6) biological samples, bacteria, specimens, and antibodies, 7) biological tissues, organs, and blood vessels, and 8) skin diseases and alopecia.

For example, for the purpose of beauty and health care, the electronic device according to the present embodiment can be used for examination, detection, measurement, evaluation, assay, analysis, observation, monitoring, beautification, hygiene, growth promotion, health promotion, diagnosis, and the like of 1) skin, 2) hair and body hair, 3) oral, endodontic, and periodontal conditions, 4) ear and nose, and 5) vital signs.

For example, for the purposes of agriculture, forestry and fisheries industry, animal husbandry, and industry, the electronic device according to the present embodiment can be used for the inspection, detection, measurement, quantification, evaluation, assay, analysis, observation, monitoring, recognition, selection, sorting, and the like of 1) industrial products (including electronic components and electronic devices), 2) agricultural products (fruits and vegetables, etc.), 3) enzymes and bacteria, 4) marine products (fish, shellfish, crustaceans, and mollusks), 5) pharmaceuticals and biological samples, 6) food and beverages, 7) presence and condition of people, animals, and objects, 8) condition of gas (including water vapor), 9) liquid, fluid, water, and humidity, 10) shape, color, internal structure, and physical condition of objects, 11) space, location, and distance, 12) contamination status of objects, 13) condition of molecules and particles, and 14) industrial waste.

For example, for the purpose of nursing care, the electronic device according to the present embodiment can be used to check excretion and to identify, manage, monitor, and the like of health conditions.

As described above, the electronic device according to the present embodiment can be used for all kinds of applications, such as inspection, detection, measurement, quantification, evaluation, assay, analysis, observation, monitoring, recognition, selection, sorting, and the like.

### (Note)

The description of the above embodiment discloses the following techniques.

(Technique 1) A near-infrared fluorescent ceramic including : a first inorganic compound; and a second inorganic compound different from the first inorganic compound, wherein
the near-infrared fluorescent ceramic emits fluorescence,
the first inorganic compound is a phosphor that emits near-infrared light having a fluorescence peak within a wavelength range of 730 nm or more and 2,500 nm or less, and
the near-infrared fluorescent ceramic has a sea-island structure including a continuous phase configured with the first inorganic compound, and a dispersed phase configured with the second inorganic compound and dispersed inside the continuous phase.

With this structure, grain boundaries and voids in the first inorganic compound are reduced, and thus quality of the near-infrared fluorescent ceramic obtained can be improved. In addition, since excitation light emitted on the near-infrared fluorescent ceramic easily reaches the first inorganic compound, the first inorganic compound efficiently absorbs the excitation light, and emission intensity of near-infrared light can be increased. Furthermore, since the near-infrared fluorescent ceramic is formed with an inorganic compound having high thermal conductivity as a whole, heat dissipation property is high, and temperature quenching of a near-infrared phosphor which is the first inorganic compound can be controlled.

(Technique 2) The near-infrared fluorescent ceramic according to technique 1, wherein the first inorganic compound and the second inorganic compound each include the same constituent element.

With this configuration, the constituent element relaxes an abrupt compositional difference at an interface between the first inorganic compound and the second inorganic compound, and acts to bind the first inorganic compound with the second inorganic compound through the constituent element. Thus, internal stress distribution is homogenized, and a strong near-infrared fluorescent ceramic which is resistant to breakage can be obtained.

(Technique 3) The near-infrared fluorescent ceramic according to technique 2, wherein the constituent element is a metal element that forms a metal ion with a valence of three.

With this configuration, both the first inorganic compound and the second inorganic compound can be activated by a Cr³⁺ ion which emits near-infrared fluorescence. Thus, a near-infrared phosphor can be obtained where both the first inorganic compound and the second inorganic compound function as a fluorescent ceramic.

(Technique 4) The near-infrared fluorescent ceramic according to any one of techniques 1 to 3, wherein the first inorganic compound includes a Cr³⁺ ion as an activator.

With this configuration, the near-infrared fluorescent ceramic can absorb visible light, especially blue light or red light, to efficiently wavelength-convert it into a near-infrared optical component.

(Technique 5) The near-infrared fluorescent ceramic according to any one of techniques 1 to 4, wherein the first inorganic compound is a compound having the same crystal structure as β-Ga₂O₃.

With this configuration, it is possible to obtain a near-infrared fluorescent ceramic having a large fluorescence spectrum half width, and suitable for emitting a near-infrared ray having small temperature quenching.

(Technique 6) The near-infrared fluorescent ceramic according to any one of techniques 1 to 5, wherein the second inorganic compound is a compound including boron.

With this configuration, boric acid (H₃BO₃) or boron oxide (B₂O₃), which is each known as a low melting point material, can be used as a part of ceramic raw materials, and thus a near-infrared fluorescent ceramic can be easily produced.

(Technique 7) The near-infrared fluorescent ceramic according to any one of techniques 1 to 6, wherein the first inorganic compound includes (Ga_{1-(x+y)} ScₓCr_{y})₂O₃ as a main component, and the second inorganic compound includes at least one of (Sc_{1-z}C_{rz})BO₃ or (Sc₁₋₂Cr_{z})PO₄, as a main component, where x, y, and z satisfy 0 < x < 1, 0 < y < 0.1, 0 < x + y < 1, and 0 ≤ z < 0.1.

With this configuration, a sea-island structure having the continuous phase 2 configured with the first inorganic compound, and the dispersed phase 3 configured with the second inorganic compound is easily formed. Consequently, the second inorganic compound acts to bind the first inorganic compound, and grain boundaries and voids in the first inorganic compound are reduced, thereby improving the quality of the near-infrared fluorescent ceramic.

(Technique 8) A near-infrared light emitting device including the near-infrared fluorescent ceramic according to any one of techniques 1 to 7.

With this structure, a near-infrared light emitting device having high output and high reliability is obtained by utilizing an all-inorganic near-infrared fluorescent ceramic which has excellent thermal conductivity, is dense, has high mechanical strength, and emits a near-infrared ray.

### EXAMPLES

Hereinafter, the present embodiment will be described in more detail with reference to examples and comparative examples, but the present embodiment is not limited to these examples.

### [Examples 1 to 3 and comparative example 1]

### (Synthesis of fluorescent ceramic)

Fluorescent ceramics of examples 1 to 3 and comparative example 1 were synthesized using a preparation method due to a solid-state reaction. Specifically, in examples 1 to 3, a composite fluorescent ceramic formed with an inorganic compound represented by a composition formula (Ga_{1-(x+y)}, Scₓ, Cr_{y})₂O₃ and an inorganic compound represented by a composition formula (Sc_{1-z}, Cr_{z})BO₃ was synthesized. In comparative example 1, a fluorescent ceramic formed with an inorganic compound represented by a composition formula (Ga_{1-(x+y)}, Scₓ, Cr_{y})₂O₃ was synthesized. Note that x, y, and z are numerical values satisfying 0 < x < 1, 0 < y < 0.1, 0 < x + y < 1, and 0 ≤ z < 0.1.

When the fluorescent ceramics of each example were synthesized, the following compound powders were used as main raw materials.
Gallium oxide (Ga₂O₃): purity 4N, manufactured by Nippon Rare Metal, Inc.
Scandium oxide (Sc₂O₃): purity 3N, manufactured by Kojundo Chemical Lab. Co., Ltd.
Chromium oxide (Cr₂O₃): purity 3N, manufactured by Kojundo Chemical Lab. Co., Ltd.
Boric acid (H₃BO₃): purity 2N, manufactured by FUJIFILM Wako Pure Chemical Corporation

First, raw materials of fluorescent ceramics of each example were weighed under blending conditions in Table 1. Next, the weighed raw materials were put in a pot of a planetary ball mill, and after water and alumina balls of Φ3 mm were added, the raw materials were wet-mixed using the planetary ball mill. Then, a mixed slurry obtained was dried sufficiently in a constant temperature bath at 125 °C, and was lightly crushed using a mortar and pestle to obtain a raw material mixed powder.

Next, 1 g of the obtained raw material mixed powder of each example was added to a mold (Φ13 mm), and then pressed using a hand press at a pressure of 10 MPa to produce a molded body. Then, the molded body of each example was fired in the atmosphere at 1,400 °C to obtain a sintered body. Finally, the sintered body of each example was polished to a film thickness of 300 µm using an automatic grinder (product number: DAG810, manufactured by DISCO Corporation) to obtain a fluorescent ceramic of each example.

**[Table 1]**

| | Blending ratio | Raw material (g) | | | |
|---|---|---|---|---|---|
| | | Ga₂O₃ | SC₂O3 | Cr₂O₃ | H₃BO₃ |
| Comparative example 1 | 0.59Ga₂O₃▪0.40Sc₂O₃▪0.01Cr₂O₃ | 6.618 | 3.301 | 0.091 | 0 |
| Example 1 | 0.59Ga₂O₃▪0.40Sc₂O₃▪0.01Cr₂O₃▪0.03H₃BO₃ | 6.618 | 3.301 | 0.091 | 0.111 |
| Example 2 | 0.59Ga₂O₃▪0.40Sc₂O₃▪0.01Cr₂O₃▪0.10H₃BO₃ | 6.618 | 3.301 | 0.091 | 0.37 |
| Example 3 | 0.59Ga₂O₃▪0.40Sc₂O₃▪0.01Cr₂O₃▪0.30H₃BO₃ | 6.618 | 3.301 | 0.091 | 1.11 |

### (Evaluation)

The fluorescent ceramics of examples obtained as described above were subjected to composition analysis, crystal structure analysis, scanning electron microscope observation, and emission properties and sintering density evaluation as follows.

### <Composition analysis>

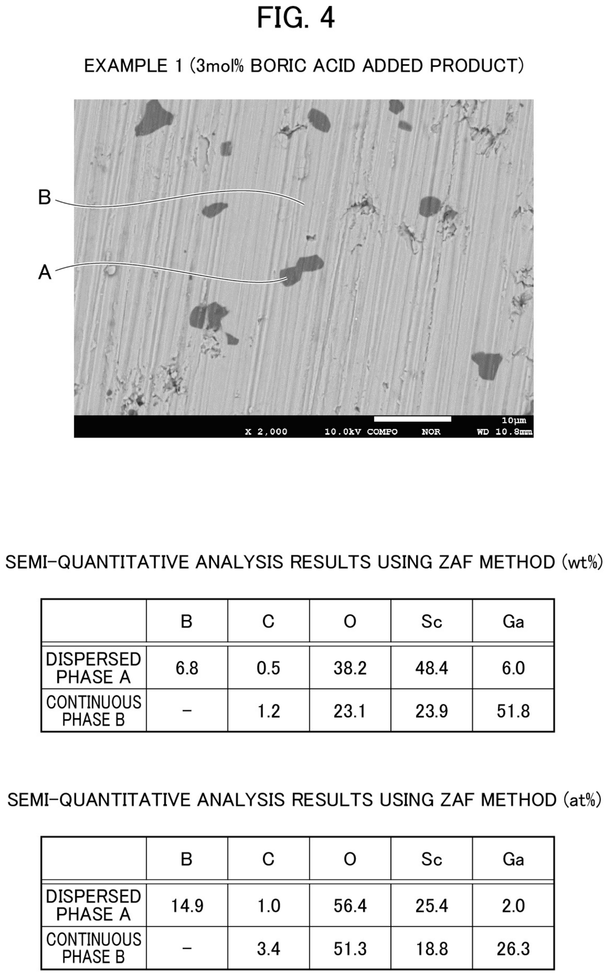

Elemental analysis was performed on fluorescent ceramics of examples 1 to 3 with wavelength dispersive X-ray spectroscopy (WDS, acceleration voltage 10 kV) using an electron beam microanalyzer (EPMA, product name: JXA-8530F plus, manufactured by JEOL Ltd.). Figs. 4 to 6 illustrate scanning electron microscope photographs (2,000x) illustrating portions of the fluorescent ceramics of examples 1 to 3 subjected to element analysis, and the results of semi-quantitative analysis corrected using a ZAF method.

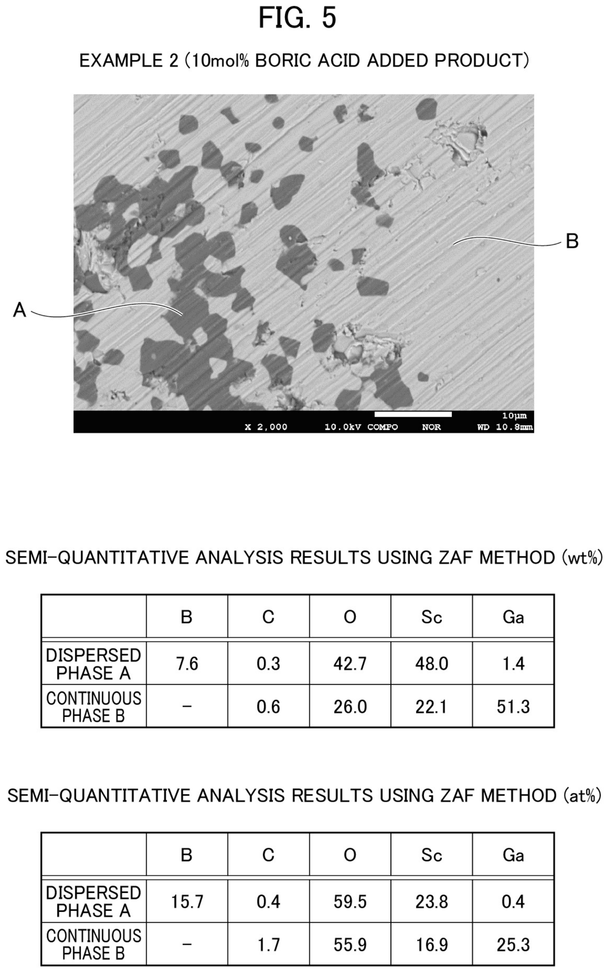

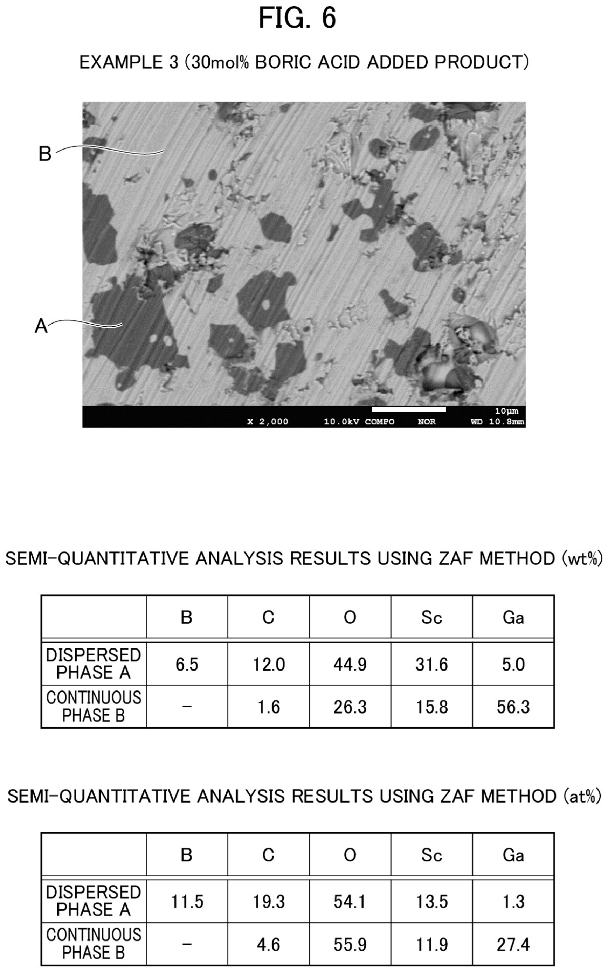

From the scanning electron microscope (SEM) photograph in Fig. 4, it is evident that the fluorescent ceramic of example 1 forms a sea-island structure. From the result of semi-quantitative analysis in Fig. 4, it is evident that constituent elements of a dispersed phase A are mainly scandium, boron, and oxygen. In contrast, it is evident that constituent elements of a continuous phase B are mainly gallium, scandium, and oxygen. Similarly, from the SEM photographs of Figs. 5 and 6, it is evident that the fluorescent ceramics of examples 2 and 3 also each form a sea-island structure. From the semi-quantitative analysis results in Figs. 5 and 6, it is evident that constituent elements of the dispersed phase A are mainly scandium, boron, and oxygen. In contrast, it is evident that constituent elements of the continuous phase B are mainly gallium, scandium, and oxygen.

Therefore, in the fluorescent ceramics of examples 1 to 3, it is evident that the first inorganic compound, which is the continuous phase, is a compound mainly including gallium, scandium, and oxygen, and the second inorganic compound, which is the dispersed phase, is a compound mainly including scandium, boron, and oxygen.

### <Crystal structure analysis>

An X-ray diffraction pattern of each of the example fluorescent ceramics was measured using an X-ray diffraction instrument (product name Miniflex (registered trademark), manufactured by Rigaku Holdings Corporation). Crystal structures of the fluorescent ceramics of examples were specified by comparing the measured X-ray diffraction patterns with patterns in the registered inorganic crystal structure database (ICSD). Furthermore, crystal compositions of the fluorescent ceramics of examples were estimated by considering the crystal structures of the fluorescent ceramics and the results of the composition analysis described above.

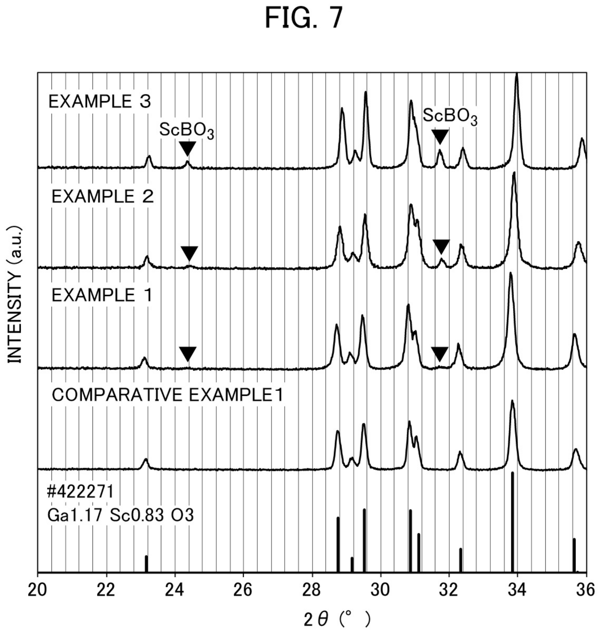

Fig. 7 illustrates X-ray diffraction patterns of the fluorescent ceramics of examples 1 to 3 and comparative example 1. Fig. 7 also illustrates a pattern of Ga_{1,17}Sc_{0.83}O₃ in the inorganic crystal database. As illustrated in Fig. 7, it is evident that the fluorescent ceramics of examples 1 to 3 each mainly include a compound having the same crystal structure as (Ga,Sc)₂O₃, because peaks similar to those of Ga_{1.17}Sc_{0.83}O₃ are prominently observed. In addition, it is evident that the fluorescent ceramics of examples 1 to 3 include a compound having the same crystal structure as ScBO₃, because peaks of ScBO₃ are observed.

It is also evident that the intensity of peaks of ScBO₃ in examples 1 to 3 increases as the amount of boric acid added increases. Thus, it is evident that the ratio of the second inorganic compound, which is the dispersed phase, increases as the amount of boric acid added, which is a low melting point material, increases.

### <Scanning electron microscope observation>

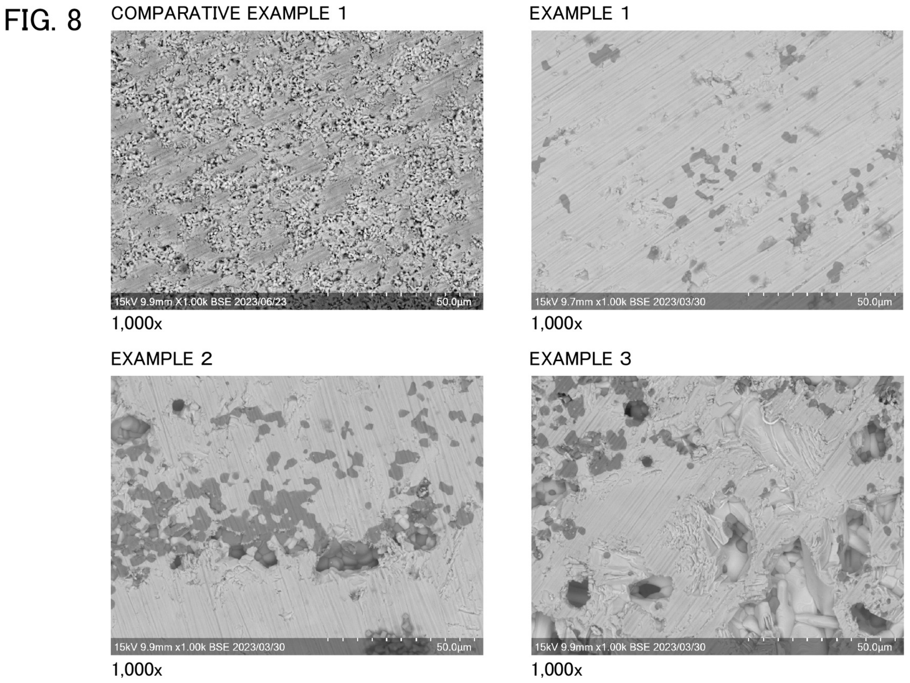

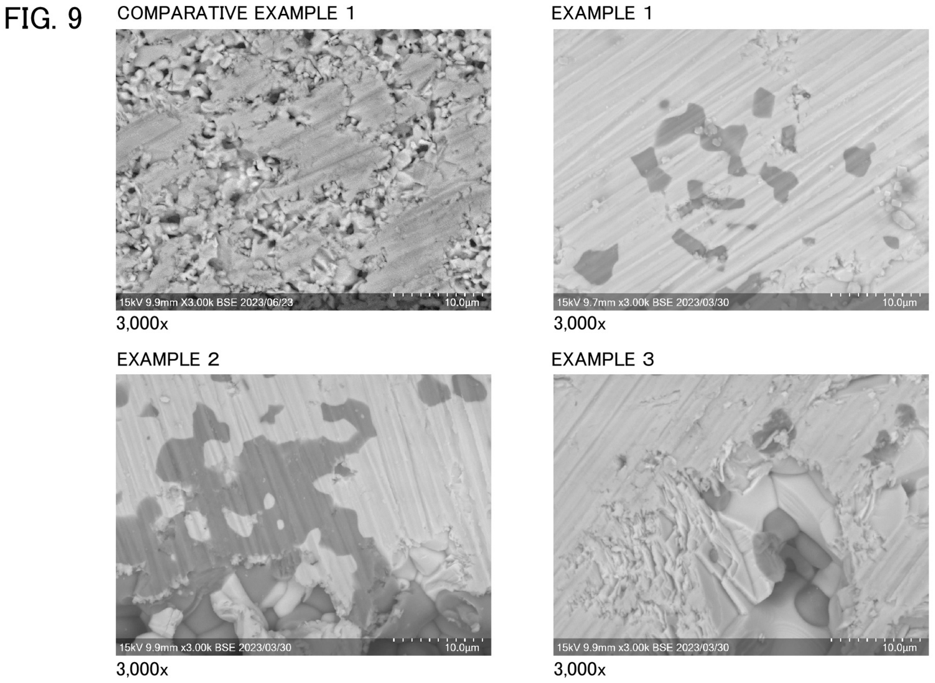

An SEM image (reflected electron image) of each of the example fluorescent ceramics was observed using a scanning electron microscope (desktop microscope Miniscope (registered trademark) TM4000II, manufactured by Hitachi High-Tech Corporation). Fig. 8 illustrates the results of observation at a magnification of 1,000 times, and Fig. 9 illustrates the results of observation at a magnification of 3,000 times.

As illustrated in Figs. 8 and 9, it is evident that the fluorescent ceramics of examples 1 to 3 each have a sea-island structure. From the composition analysis, the fluorescent ceramics of examples 1 to 3 mainly include scandium, boron, and oxygen as constituent elements of the dispersed phase, and mainly include gallium, scandium, and oxygen as constituent elements of the continuous phase. Furthermore, from the crystal structure analysis, the fluorescent ceramics of examples 1 to 3 mainly include a compound having the same crystal structure as (Ga,Sc)₂O₃, and further include a compound having the same crystal structure as ScBO₃. Thus, in the fluorescent ceramics of examples 1 to 3, it is evident that the continuous phase is mainly configured with (Ga,Sc)₂O₃, and the dispersed phase is mainly configured with ScBO₃.

Furthermore, it is evident from Figs. 8 and 9 that, in the fluorescent ceramics of examples 1 to 3, there are few voids at the interface between the continuous phase and the dispersed phase in the sea-island structure. On the other hand, it is evident that the fluorescent ceramic of comparative example 1 has many grain boundaries and a large number of voids. Thus, it is evident that by having the sea-island structure formed with the first inorganic compound and the second inorganic compound, voids and grain boundaries are reduced, and fluorescent ceramics with excellent ceramic quality can be obtained.

### <Emission properties>

The emission spectrum, internal quantum efficiency (IQE), light absorption rate (Abs.), and external quantum efficiency (EQE) of each of the example fluorescent ceramics were measured under the condition of an excitation wavelength of 450 nm using an absolute PL quantum yield measuring apparatus (product No. C13534-24, manufactured by Hamamatsu Photonics K.K.).

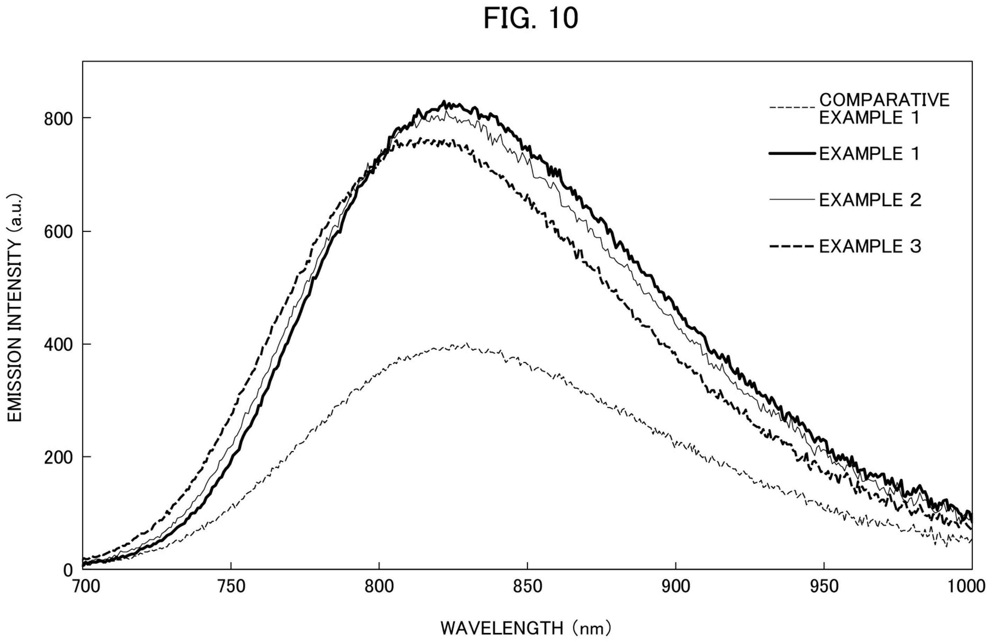

The emission spectrum of each of the example fluorescent ceramics is illustrated in Fig. 10, and the internal quantum efficiency, light absorption rate, and external quantum efficiency are listed in Table 2. It is evident from Fig. 10 that the fluorescent ceramics of examples 1 to 3 and comparative example 1 emit broad fluorescence having an emission peak in a range exceeding 800 nm. Furthermore, it is evident that the maximum emission intensity of the fluorescent ceramics of examples 1 to 3 is nearly twice as large as that of comparative example 1. It is also evident from Table 2 that the light absorption rate and the external quantum efficiency of the fluorescent ceramics of examples 1 to 3 are greatly improved as compared with those of comparative example 1. Specifically, the internal quantum efficiency exceeds 85%, and in a preferred embodiment, was at a high level exceeding 90%, while the light absorption rate exceeded 70%, and in a preferred embodiment, was at a high level exceeding 75%. Therefore, the external quantum efficiency exceeded 60%, and in a preferred embodiment, was at a high level exceeding 65%.

It is evident that fluorescent ceramics with greatly improved emission properties can be obtained by reducing voids and grain boundaries, thereby improving the quality of ceramics.

**[Table 2]**

| | Internal quantum efficiency (%) | Light absorption rate (%) | External quantum efficiency (%) | Sintering density (g/cm³) |
|---|---|---|---|---|
| Comparative example 1 | 90 | 38 | 34 | 3.56 |
| Example 1 | 92 | 75 | 69 | 4.68 |
| Example 2 | 91 | 74 | 68 | 4.51 |
| Example 3 | 87 | 74 | 64 | 3.98 |

### <Sintering density>

The sintering density (bulk density) of each of the example fluorescent ceramics was measured. The sintering density was determined by measuring dimensions of each example fluorescent ceramic, calculating the volume, and then dividing a dry weight of each example fluorescent ceramic by the volume. The measurement results are listed in Table 2.

As listed in Table 2, it is evident that the fluorescent ceramics of examples 1 to 3 are each a dense ceramic that has a high density and reduced voids, as compared with the fluorescent ceramic of comparative example 1.

### [Example 4]

### (Synthesis of fluorescent ceramic)

A fluorescent ceramic of example 4 was synthesized using a preparation method due to a solid-state reaction. Specifically, in example 4, a fluorescent ceramic of a composite was synthesized which includes an inorganic compound represented by a composition formula (Ga_{1-(x+y)}, Scₓ, Cr_{y})₂O₃, an inorganic compound represented by a composition formula (Sc_{1-z}, Cr_{z})BO₃, and an inorganic compound represented by a composition formula (Sc_{1-z}, Cr_{z})PO₄. Note that x, y, and z are numerical values satisfying 0 < x <1, 0 < y < 0.1, 0 < x + y < 1, and 0 ≤ z < 0.1.

When the example fluorescent ceramic was synthesized, the following compound powders were used as main raw materials.
Gallium oxide (Ga₂O₃): purity 4N, manufactured by Nippon Rare Metal, Inc.
Scandium oxide (Sc₂O₃): purity 3N, manufactured by Kojundo Chemical Lab. Co., Ltd.
Chromium oxide (Cr₂O₃): purity 3N, manufactured by Kojundo Chemical Lab. Co., Ltd.
Boric acid (H₃BO₃): purity 2N, manufactured by FUJIFILM Wako Pure Chemical Corporation
Diammonium hydrogen phosphate ((NH₄)₂HPO₄): purity 2N, manufactured by FUJIFILM Wako Pure Chemical Corporation

First, raw materials of the example fluorescent ceramic were weighed under blending conditions listed in Table 3, and raw material mixed powder was obtained in the same manner as in example 1.

Next, 1 g of the obtained raw material mixed powder was added to a mold (Φ13 mm), and then pressed using a hand press at a pressure of 10 MPa to produce a molded body. The molded body was then calcined in the atmosphere at 1,350 °C to obtain a sintered body. Finally, the sintered body was polished to a film thickness of 300 µm using an automatic grinder to obtain a fluorescent ceramic of the present example.

**[Table 3]**

| | Blending ratio | Raw material(g) | | | | |
|---|---|---|---|---|---|---|
| | | Ga₂O₃ | SC₂O₃ | Cr₂O₃ | H₃BO₃ | (NH4)₂HPO₄ |
| Example 4 | 0.59Ga₂O₃▪0.40Sc₂O₃▪0.01Cr₂O₃ ▪0.10H₃BO₃▪0.10(NH₄)₂HPO₄ | 6.618 | 3.301 | 0.091 | 0.37 | 0.79 |

### (Evaluation)

The fluorescent ceramic of example 4 obtained as described above was subjected to crystal structure analysis, scanning electron microscope observation, and emission properties and sintering density evaluation in the same manner as in example 1. Furthermore, the fluorescent ceramic of example 4 was subjected to energy dispersive X-ray analysis to evaluate element distribution.

### <Crystal structure analysis>

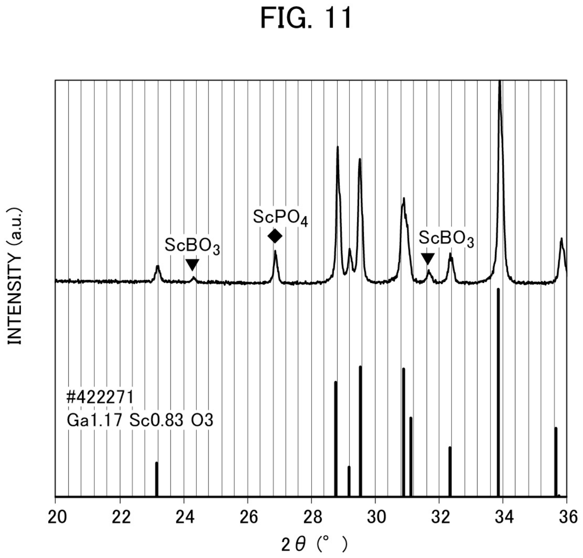

Fig. 11 illustrates an X-ray diffraction pattern of the fluorescent ceramic of example 4. As illustrated in Fig. 11, it is evident that the fluorescent ceramic of example 4 mainly includes a compound having the same crystal structure as (Ga, Sc)₂O₃, because peaks similar to those of Ga_{1.17}Sc_{0.83}O₃ are prominently observed. In addition, it is evident that the fluorescent ceramic of example 4 includes a compound having the same crystal structure as ScBO₃ and a compound having the same crystal structure as ScPO₄, because peaks of ScBO₃ and ScPO₄ are observed.

### <Scanning electron microscope observation>

Fig. 12 illustrates SEM images (reflected electron images) of the fluorescent ceramic of example 4 observed at a magnification of 1,000 times and at a magnification of 3,000 times. As illustrated in Fig. 12, it is evident that the fluorescent ceramic of example 4 forms a sea-island structure. Furthermore, it is evident from Fig. 12 that there are few voids at the interface between the continuous phase and the dispersed phase of the sea-island structure in the fluorescent ceramic of example 4. Thus, it is evident that by having the sea-island structure formed with the first inorganic compound and the second inorganic compound, voids and grain boundaries are reduced, and a fluorescent ceramic excellent in quality as a ceramic can be obtained.

### <Emission properties>

Table 4 illustrates the internal quantum efficiency, light absorption rate, and external quantum efficiency of the fluorescent ceramic of example 4. It is evident from Table 4 that the light absorption rate and the external quantum efficiency of the fluorescent ceramic of example 4 are greatly improved as compared with the fluorescent ceramic of comparative example 1. Thus, it is evident from example 4 that voids and grain boundaries are reduced, and the quality of the ceramic is enhanced, thereby obtaining a fluorescent ceramic with greatly improved emission properties.

**[Table 4]**

| | Internal quantum efficiency (%) | Light absorption rate (%) | External quantum efficiency (%) | Sintering density (g/cm³) |
|---|---|---|---|---|
| Example 4 | 90 | 72 | 65 | 3.87 |

### <Sintering density>

As illustrated in Table 4, it is evident that the fluorescent ceramic of example 4 is a denser ceramic having reduced voids compared with the fluorescent ceramic of comparative example 1.

### <Energy dispersive X-ray analysis>

An SEM image (reflected electron image) of the fluorescent ceramic of example 4 was observed using a scanning electron microscope (desktop microscope Miniscope (registered trademark) TM4000II, manufactured by Hitachi High-Tech Corporation). Furthermore, energy dispersive X-ray analysis (EDX analysis) was performed, and element maps of gallium, scandium, phosphorus, and boron were made.

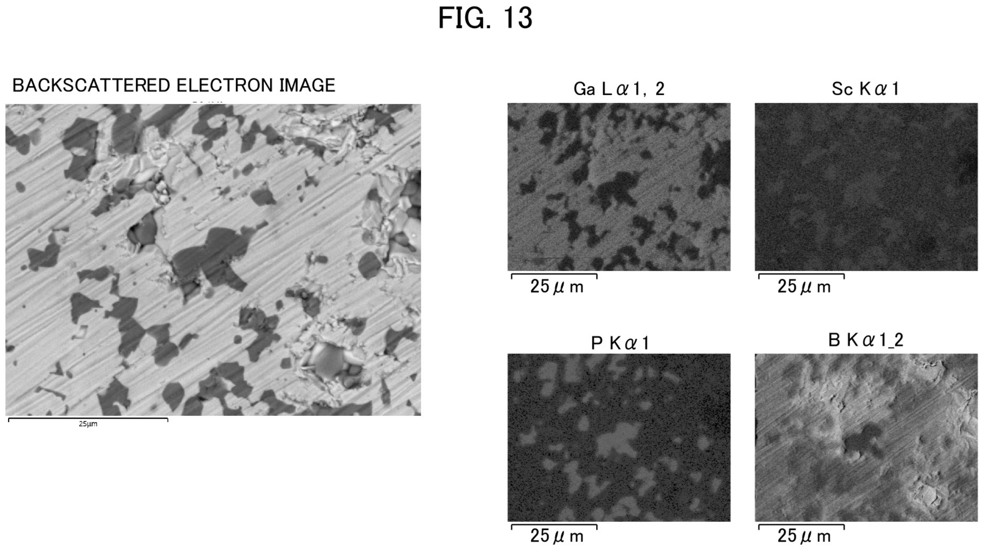

As illustrated in Fig. 13, in the reflected electron image of the fluorescent ceramic of example 4, it is evident that the concentration of phosphorus is high in a portion having a high contrast. Although scandium is included in both the portion having a high contrast and a portion having a low contrast in the reflected electron image, it is evident that the concentration is relatively high in the portion having a high contrast. Furthermore, in the reflected electron image, it is evident that the concentration of gallium is high in the portion having a low contrast. From this result and the crystal structure analysis, it is evident that in the fluorescent ceramic of example 4, the continuous phase is configured with (Ga, Sc)₂O₃, and the dispersed phase is configured with at least ScPO₄.

Although the present embodiment has been described above, the present embodiment is not limited to these descriptions, and various modifications are possible within the scope of the gist of the present embodiment.

The entire contents of Japanese Patent Application No. 2023-115837 (application date: July 14, 2023) are incorporated herein by reference.

### INDUSTRIAL APPLICABILITY

In the present disclosure, it is possible to provide a near-infrared fluorescent ceramic having high emission properties and excellent quality as a ceramic, and a near-infrared light emitting device provided with the near-infrared fluorescent ceramic.

### REFERENCE SIGNS LIST

- 1: Near-infrared fluorescent ceramic
- 2: Continuous phase
- 3: Dispersed phase
- 10: Near-infrared light emitting device

## Claims

1. A near-infrared fluorescent ceramic, comprising:
a first inorganic compound; and
a second inorganic compound different from the first inorganic compound, wherein
the near-infrared fluorescent ceramic emits fluorescence,
the first inorganic compound is a phosphor that emits near-infrared light having a fluorescence peak within a wavelength range of 730 nm or more and 2,500 nm or less, and
the near-infrared fluorescent ceramic has a sea-island structure including a continuous phase configured with the first inorganic compound, and a dispersed phase configured with the second inorganic compound and dispersed inside the continuous phase.

2. The near-infrared fluorescent ceramic according to claim 1, wherein the first inorganic compound and the second inorganic compound each include the same constituent element.

3. The near-infrared fluorescent ceramic according to claim 2, wherein the constituent element is a metal element that forms a metal ion with a valence of three.

4. The near-infrared fluorescent ceramic according to any one of claims 1 to 3, wherein the first inorganic compound includes a Cr³⁺ ion as an activator.

5. The near-infrared fluorescent ceramic according to any one of claims 1 to 4, wherein the first inorganic compound is a compound having the same crystal structure as β-Ga₂O₃.

6. The near-infrared fluorescent ceramic according to any one of claims 1 to 5, wherein the second inorganic compound is a compound including boron.

7. The near-infrared fluorescent ceramic according to any one of claims 1 to 6, wherein the first inorganic compound includes (Ga_{1-(x+y)}SeₓCr_{y})₂O₃ as a main component, and the second inorganic compound includes at least one of (Sc_{1-z}Cr_{z}) BO₃ or (Sc_{1-z}Cr_{z})PO₄, as a main component, where x, y, and z satisfy 0 < x < 1, 0 < y < 0.1, 0 < x + y < 1, and 0 ≤ z < 0.1.

8. A near-infrared light emitting device comprising:
the near-infrared fluorescent ceramic according to any one of claims 1 to 7.
